# EUROPÄISCHE PATENTSCHRIFT

(11) **EP 0 413 232 B1**
(45) Veröffentlichungstag und Bekanntmachung des Hinweises auf die Patenterteilung: **28.12.1994**
(21) Anmeldenummer: 90115118.3
(22) Anmeldetag: 07.08.1990
(51) Int. Cl.: G01N 27/28

(54) **Elektrodenhalterung für Eintauch-, Durchfluss- und Anbau-Messysteme in der analytischen Chemie**
Holder for electrodes for a measuring system to be plunged and immersed, made of several elements, in analytical chemistry
Support pour électrodes pour système de mesure par plongée et immersion constitué de plusieurs éléments en chimie analytique

(30) Priorität: 18.08.1989 DE 3927282
(43) Veröffentlichungstag der Anmeldung: 20.02.1991
(73) Patentinhaber: Endress + Hauser Conducta Gesellschaft für Mess- und Regeltechnik mbH + Co., D-70839 Gerlingen (DE)
(72) Erfinder: Stellmacher, Klaus, D-7261 Oberreichenbach (DE); Oppermann, Hans-Joachim, D-7121 Gemmrigheim (DE)
(74) Vertreter: Otte, Peter, Dipl.-Ing.

(56) Entgegenhaltungen:
- WO-A-86/07151
- DE-B- 2 557 542
- DE-U- 8 909 903
- GB-A- 1 431 206
- US-A- 3 691 846
- US-A- 4 664 772

## Beschreibung

### Stand der Technik

Die Erfindung betrifft eine Elektrodenhalterung für Eintauch- und Durchfluß-Meßsysteme in der analytischen Chemie nach dem Oberbegriff des Anspruchs 1.

In der analytischen Chemie ist die Kalibrierung bzw. Eichung und/oder Reinigung von chemischen Sensoren bei Eintauch- und Durchfluß-Meßsystemen, etwa zur kontinuierlichen Überwachung biologischer oder chemischer Verfahren durch entsprechende Messung der analytischen Parameter eines flüssigen Meßmediums sehr häufig unverzichtbar, andererseits aber umständlich und aufwendig, da zu diesem Zweck die entsprechenden Meßelektroden, bei denen es sich beispielsweise um Meßsysteme für die pH-, Leitfähigkeits-, Sauerstoff- oder Chlormessung u.dgl. handelt, unter Prozeßbedingungen aus dem Meßmedium herausgefahren werden müssen, ohne daß immer die Gelegenheit besteht, zu diesem Zweck den Prozeß zu unterbrechen, das Meßmedium abzulassen oder eine Rohrleitung für den Durchfluß des Meßmediums vollständig zu sperren.

Es ist daher bekannt (WO 86/07151), die Meßwertgebersonde als Teil der Meßeinrichtung innerhalb einer Führungseinrichtung zur Halterung und Führung des Meßfühlers zwischen einer Betriebsstellung und einer Wartungsstellung zu bewegen, wozu ferner ein Absperrorgan vorgesehen ist, welches beim Zurückfahren des Meßfühlers den hierdurch freigewordenen Bereich gegenüber dem Meßmedium abschließt. Das Grundprinzip bei solchen Meßwertgebersonden besteht also darin, daß man zu Eichungs- oder Reinigungszwecken oder auch nur, um die Elektrode beispielsweise für einen vorgegebenen Zeitraum zu wässern, die Elektrodenhalterung, die in die Rohrleitung mit dem Meßmedium oder in den Reaktionsbehälter hineinreicht, so ausbildet, daß die Elektrode so verfahrbar ist, daß sie aus ihrer Eintauchstellung in eine herausgehobene oder zurückgezogene Stellung überführt werden kann, wobei dann gleichzeitig die bisher bestehende Verbindung zum Meßmedium in geeigneter Weise abgeschottet wird. Es ist in diesem Zusammenhang bekannt (deutsche Auslegeschrift 25 57 542), die Elektrode in Kugelhähne als Absperrventil so einzubauen, daß beim Stellungswechsel des Kugelhahns die Elektrode von dem Meßmedium getrennt und Reinigungs- oder Eichlösungen oder sonstigen Behandlungen zugänglich gemacht wird. Zu diesem Zweck ist das vorgesehene Drehventil des Kugelhahns als Mehrwegeventil ausgebildet und verbindet in einer ersten Stellung zwei das Meßmedium führende Leitungsstück, während in einer anderen Stellung zwei ein anderes Meßmedium führende Leitungsstücke verbunden werden. Die Elektrode befindet sich dabei aber in einer zur Drehachse des Ventilkörpers koaxialen Bohrung und kann daher, da der Ventilkörper in seiner Drehachse keine Schwenkbewegung durchführt, durch die Drehbewegungen auch nicht beeinträchtigt werden. Problematisch ist allerdings, daß der Ventilkörper aufgrund seiner Ausbildung nicht in der Lage ist, die Elektrodenbohrung gegenüber den verschiedenen Leitungsstücken vollständig abzuschließen, so daß eine Entnahme der Elektrode eine offene, d.h. gegenüber den Leitungsstücken nicht abgedichtete Bohrung hinterläßt.

In diesem Zusammenhang ist es auch bekannt (europäische Patentanmeldung 0271764), speziell für pH-Elektroden einen in der Betriebsstellung offenen und in der Servicestellung geschlossenen Eichraum um den aktiven Elektrodenbereich dadurch zu schaffen, daß eine längsverschiebliche Hülse in einer Gleitführung der Elektrodenhalterung gelagert ist und in ihrem Inneren den Elektrodenträger aufnimmt, wobei durch Zwangssteuerung Längskanäle aufgesteuert und mit Ventilanschlüssen im Steuerkopf der Armatur verbunden werden, die in den Eichraum münden, so daß diesem in der Servicestellung entsprechende Medium wie Wasser/Reinigungsmittel, Pufferlösung u.dgl. zuführbar sind, während in der Betriebsstellung sämtliche Ringräume, Dichtungsbereiche und Öffnungen der Armatur unter einem von innen nach außen wirkenden Preßluftdruck stehen.

Die mit Absperrorganen arbeitenden Elektrodenhalterungen können als Absperrkörper für den Hahn zylinder-, kugel- oder kegelförmige Küken verwenden, wobei sich jeweils bestimmte Vor- und Nachteile entsprechend diesen Bauarten ergeben.

Besonders gravierend ist bei Kugel- bzw. Zylinderhähnen solcher Absperrorgane jedenfalls, daß natürlich die jeweilige Meßelektrode oder -sonde zunächst vollkommen aus dem Drehbereich des Kükens herausgezogen werden muß, bevor durch Verdrehung des zylinder- oder kugelförmigen Absperrkörpers (Kükens) die Verbindung zum gegebenenfalls sehr störende und verschmutzende Stoffe enthaltenden Meßmedium abgetrennt werden kann. Dies bedeutet aber, daß sich im Absperrorganbereich verschmutzte Toträume ergeben, was, insbesondere bei abrasiven Stoffen oder zu Ablagerungen neigenden Medien erhebliche Störungen hervorrufen kann. Ferner ist problematisch, daß notwendigerweise die Meßelektrode und gerade deren sensitiver vorderer Keil zunächst vollkommen aus dem Drehbereich des Kükens herausgezogen, also entfernt werden muß, bevor das Küken gedreht werden kann, denn sonst schert das die Meßelektrode vom Medium trennende Küken beispielsweise die empfindliche Elektrodenspitze ab und zerstört das Meßsystem vollständig. Es ist daher auch bekannt, im vorderen Bereich der Meßsonde einen geeigneten Stoßschutz, beispielsweise in Form von Stoßschutzbolzen oder Stoßschutzkörben anzuordnen, damit der Hahn die Elektrode nicht abschert. Die sind aber wiederum Schmutz- und Faserfänger, unter Umständen bis zur Blockade des Systems.

Ferner ist nachteilig, daß eine erhebliche Hublänge erforderlich ist, um die Elektrode, die mit ihrer Verschiebehalterung durch die Kükenöffnung geführt ist, sowohl aus dem Meßmedium zu entfernen, als auch vollständig aus dem Drehbereich des Kükens zurückzuziehen. Durch diese Hublänge geht freie Arbeitslänge im Bereich des Meßmediums verloren oder muß bautechnisch aufwendig zur Verfügung gestellt werden, denn die Länge, um die die Meßsonde in das Meßmedium eintaucht, muß beim Zurückziehen der Meßsonde hinten auch wieder herausgezogen werden.

Speziell im Bereich eines Kugelhahns ergeben sich noch Probleme, weil dieser mehr oder weniger schwimmend gelagert ist und seine Symmetrierung durch entsprechende Dichtungen im Sperrorgangehäuse erfährt, so daß ein Kugelhahn auch weniger für die Modifikationen einsetzbar ist, für die die im folgenden erläuterte Erfindung sich besonders eignet.

Der Erfindung liegt die Aufgabe zugrunde, den Bereich des Absperrorgans bei einer Elektrodenhalterung so auszubilden, daß beim Umschalten des Kükens keine zur Verschmutzung oder sonstigen Störungen neigenden Toträume mehr nachteilig in Erscheinung treten.

### Vorteile der Erfindung

Die Erfindung löst diese Aufgabe mit den kennzeichnenden Merkmalen des Hauptanspruchs und hat den Vorteil, daß es durch die einseitige Öffnung des Kükens möglich ist, in einem Durchgang sowohl die Elektrode als auch die Toträume zu spülen, die sonst gegenüber dem Elektrodenreinigungsbereich in der zurückgezogenen Stellung abgeschlossen sind und nur durch gesonderte Reinigungsmaßnahmen, soweit realisierbar und vom Meßmedium her notwendig, gereinigt werden können.Dabei werden Faserstoffe (Papier oder textile Materialien) einfach abgeschoben, da sich keine Querbohrungen wie bei Schutzkörben im Kükenbereich befinden.

Vorteilhaft ist ferner, daß die Elektrode nicht mehr so weit zurückgezogen zu werden braucht, wie bei den bisherigen Ausführungsformen, sondern bei bemerkenswerter Hubbegrenzung im Bereich des Kükens verbleibt, dennoch aber unter allen Umständen sichergestellt ist, daß das Küken beim Umschalten die Elektrode auch ohne Schutzkorb oder Schutzbolzen nicht beschädigen kann.

Durch die in den Unteransprüchen aufgeführten Maßnahmen sind vorteilhafte Weiterbildungen und Verbesserungen der im Hauptanspruch angegebenen Elektrodenhalterung möglich. Besonders vorteilhaft ist, daß die beim Umschalten des Kükens sich im Kükenraum befindliche Elektrode automatisch durch eine vom Küken erzeugte Kurvenform in ihre Endlage gedrückt wird, so daß Beschädigungen der Elektrode ausgeschlossen sind. Dabei kann der Antrieb pneumatisch, hydraulisch, elektrisch oder in sonstiger geeigneter Weise, auch manuell erfolgen. In besonderer Weise eignet sich ein zylindrisches Küken als Absperrkörper, da bei diesem der Bereich der Dichtungen einfacher gehandhabt werden kann. Hier ergibt sich ferner ein weiterer Vorteil dadurch, daß bei zylindrischem Küken eine verbesserte Dichtwirkung dadurch erzielt werden kann, daß das Küken selbst eine O-Ring-Dichtung lagert, die bei entsprechend gedrehtem Küken die Zuflußöffnung zum Meßmedium abdichtet, zusätzlich zu weiteren Radialdichtungen an den beiden Endbereichen des zylindrischen Kükens, wodurch der Außenbereich gegen ein Eindringen des Meßmediums abgedichtet ist. Bei einem zylindrischen küken ergibt sich ferner der Vorteil, daß ein schwimmender Sitz gegenüber einem Kugelhahn vermieden werden kann, wobei vor allen Dingen auch dessen vereinfachte Herstellung aus beliebigem, geeignetem Halbzeug berücksichtigt werden muß, während für Kugelhähne nur spezielle Materialien bei erheblich kostenintensiver Herstellung der Kugelform in Betracht kommen. Es ist aber darauf hinzuweisen, daß sich für die Realisierung vorliegender Erfindung grundsätzlich auch kugelförmige Küken als Absperrorgane eignen, auch wenn zylindrische Küken mit größerem Erfolg einsetzbar sind.

### Zeichnung

Ein Ausführungsbeispiel der Erfindung ist in der Zeichnung dargestellt und wird in der nachfolgenden Beschreibung näher erläutert. Es zeigen:
- Fig. 1: eine erste Ausführungsform einer Elektrodenhalterung mit zylindrischem Küken als Absperrkörper im Längsschnitt und
- Fig. 2: die gleiche Ausführungsform wie in Fig. 1 dargestellt, ebenfalls im Längsschnitt, jedoch um 90° um die Längsachse gedreht, während die
- Fig. 3, 4, 5 und 6: den zylindrischen Kükenhahn in einer Seitenansicht, in einer Schnittdarstellung längs der Linie IV-IV der Fig. 3, in einer der Darstellung der Fig. 3 gegenüberliegenden Seitenansicht und in einer Schnittdarstellung längs der Linie VI-VI, in dieser Reihenfolge, zeigen.

### Beschreibung der Ausführungsbeispiele

Der Grundgedanke vorliegender Erfindung besteht darin, das vorzugsweise zylindrische Küken auf einer Seite offen zu lassen, so daß der von diesem Absperrkörper gebildete Durchfluß- oder Durchtrittskanal auf einer Seite nicht geschlossen ist und auf dieser Seite auch der vordere Meßsondenteil, also beispielsweise die Elektrodenspitze verbleiben kann, bei geringerem Hub und mit der Möglichkeit, bei dichter Absperrung des Meßmediumzulaufs mit der anderen, geschlossenen Seite des Kükens sowohl die Toträume als auch gleichzeitig die Elektrode zu reinigen, mit Puffer- oder Eichlösungen zu beaufschlagen oder auch einfach nur zu wässern oder sonstige beliebige Manipulationen in diesem nunmehr frei zugänglichen Bereich vorzunehmen.

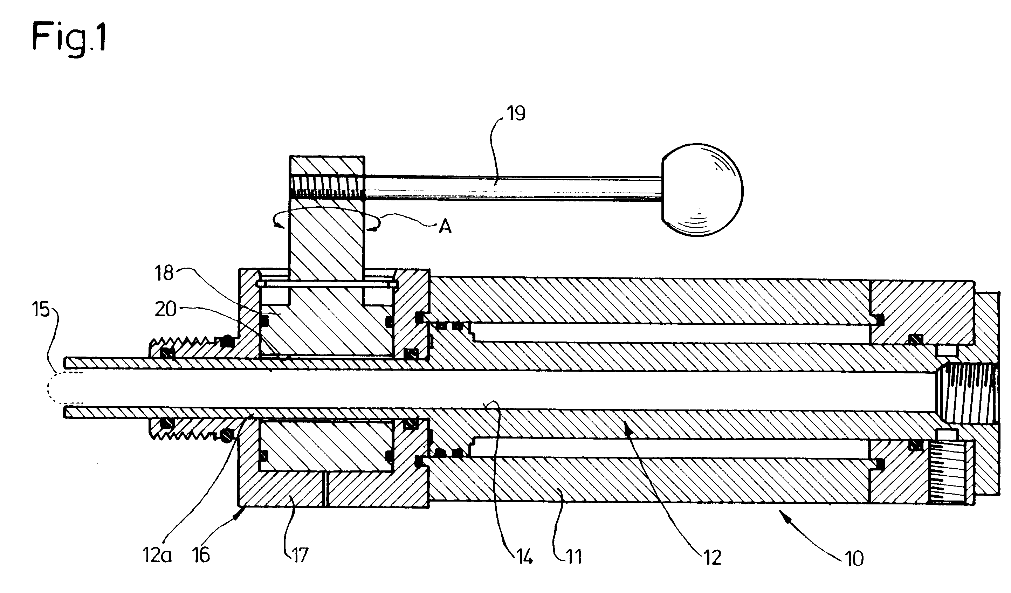

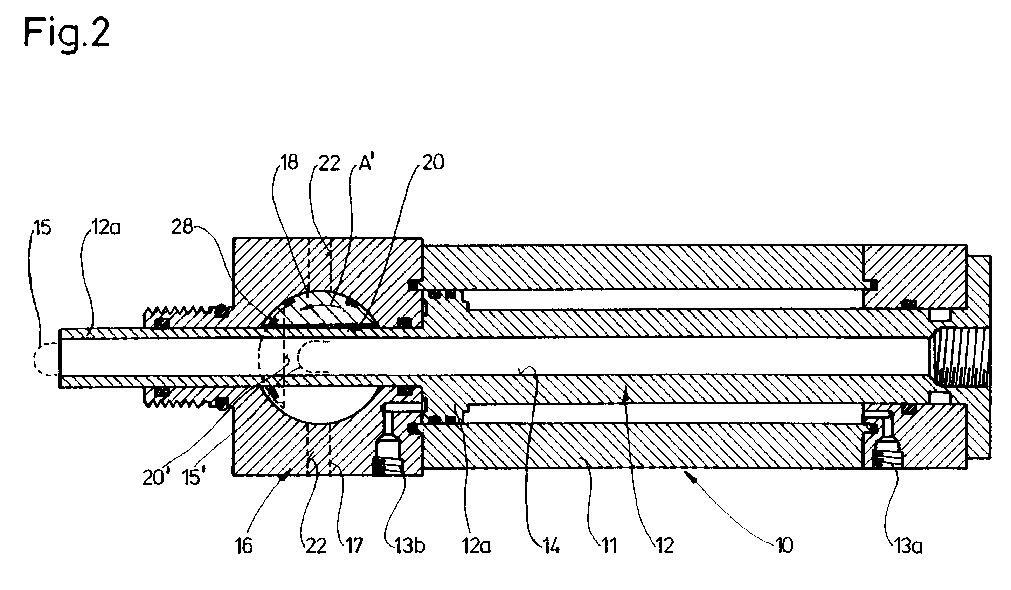

In den Fig. 1 und 2 ist die Elektrodenhalterung mit 10, ein vorzugsweise zylindrisches Außenrohr der Elektrodenhalterung mit 11 und das in diesem Außenrohr längsverschieblich gelagerte, gleichzeitig die eigentliche Meßsonde aufnehmende Innenrohr mit 12 bezeichnet.

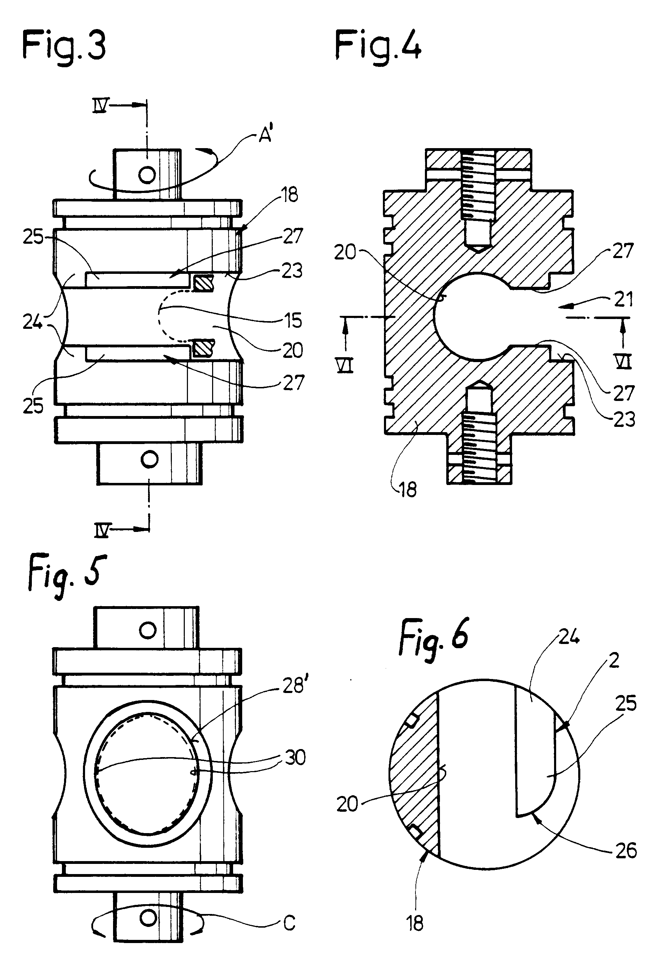

Grundsätzlich ist Art und Ausbildung von Innen- und Außenrohr sowie die bei vorliegendem Ausführungsbeispiel mögliche gesteuerte und daher auch automatisch vollziehbare relative Axialverschiebung zwischen diesen beiden Rohren beliebig, da es der Erfindung im wesentlichen auf die Gestaltung im Bereich des Absperrorgans ankommt. Man erkennt aber in der Darstellung der Fig. 2 Druckmittelein- und -auslässe 13a, 13b, durch welche eine kolbenartige Verdickung 12a des Innenrohrs durch entsprechende, bevorzugte ventilgesteuerte Beaufschlagung mit dem Druckmittel entweder nach unten, wie in den Fig. 1 und 2 dargestellt, oder nach oben verfahrbar ist, wodurch sich dann entsprechend auch die einstückig mit der Verdickung 12a verbundenen, durchbohrten kolbenstangenartigen beidseitigen Verlängerungen verschieben, wobei dann in der mittleren Bohrung 14 des Innenrohrs 12 das Meßsystem aufgenommen ist, welches nicht dargestellt ist. Allerdings ist die Spitze des Meßsystems in Fig. 1 nach außen geringfügig überstehend punktiert dargestellt und mit 15 bezeichnet; es kann sich hierbei um die Glasspitze einer pH-Elektrode oder um eine sonstige beliebige Meßsonde handeln. In ähnlicher Weise ist diese Elektrodenspitze in der Darstellung der Fig. 3 angedeutet, so daß man sich eine Vorstellung von dem im folgenden zu schildernden Mechanismus vorliegender Erfindung machen kann.

Inneres und äußeres Rohr 11 und 12 bilden daher eine Art Zylinder/Kolbenaggregat zur axialen Relativverschiebung des inneren Rohrs 12 mit der Meßsonde, wie das jeweilige Meßsystem im folgenden nur noch genannt wird, während, wie die Zeichnung vereinfacht zeigt, am unteren Ende des äußeren, insofern den Zylinder bildenden Rohres 11 das Absperrorgan 16 angeordnet ist, welches seinerseits wieder aus einem äußeren Gehäuse 17 und dem eigentlichen Absperrkörper 18 besteht. Letzterer ist bei dem dargestellten Ausführungsbeispiel gebildet von einem zylindrischen Küken, welches vereinfacht zum erleichterten Verständnis hier von einem äußeren Handhebel 19 durch dessen Betätigung längs des Doppelpfeils A eine Drehbewegung des zylindrischen Kükens 18 bewirkt.

Dabei durchsetzt eine untere Verlängerung 12a des inneren Rohrs 12 die zentrale Durchtrittsbohrung bzw. den Durchlaßkanal 20 des zylindrischen Kükens 18 in dieser dargestellten Position, so daß, wie erkennbar, das dargestellte Meßsystem sich mit nach unten ausgefahrener Meßsonde in der Betriebsbereitschaftsposition befindet. Eine Vielzahl nicht im einzelnen bezeichneter Dichtungen sorgt dafür, daß der Zylinder/Kolbenbereich und die oberen Anschlüsse der Meßsonde sich entweder außerhalb des Meßmediums befinden oder mit diesem jedenfalls nicht in Berührung kommen können.

Bei vorliegender Erfindung kommt es im wesentlichen auf die spezielle Ausführungsform des hier zylindrisch ausgelegten Kükens im Absperrorgan an, wobei die Schnittdarstellung der Fig. 4 am besten geeignet ist, den Sachverhalt anschaulich darzustellen. Man erkennt, daß der zentrale Durchtrittskanal 20, durch welchen sich die Verlängerung 20a des inneren Rohres mit dem Schaft der Meßsonde erstreckt, auf einer Seite, nämlich bei 21 offen ist, so daß das Küken bei dieser Querschnittdarstellung eine ganz allgemein U-förmige Form annimmt.

Dieser offene Bereich 21 führt nun dazu, daß die Meßsonde mit ihrer Spitze 15 auch in der im folgenden allgemein als Wartungsstellung bezeichneten, zurückgezogenen Position im Bereich des Kükens verbleiben kann und nur soweit zurückgezogen zu werden braucht, wie in der Ausgangsposition der Fig. 3 (vor Beginn der Kükendrehbewegung) dargestellt, wobei hier noch eine Besonderheit hinzukommt, die von beidseitigen Sicherheitsstegen im offenen Bereich des Kükens gebildet ist, zur Sicherung gegen Abscheren der Meßsondenspitze und zum automatischen Herausdrücken derselben soweit erforderlich, worauf gleich noch eingegangen wird.

Wird nämlich bei nunmehr einseitig offenem Küken 18 das innere Rohr 12 herausgefahren, in der Zeichenebene der Fig. 1 und 2 nach oben weggezogen, dann kann die vordere Spitze der Meßsonde, wie in Fig. 3 gezeigt, ohne weiteres im Bereich des als Absperrkörper wirkenden Kükens verbleiben, da kein Wandbereich mehr vorhanden ist, der die Meßsondenspitze oder die Meßsonde abscheren könnte.

Wird also bei zurückgezogenem Innenrohr 12 das bei der dargestellten Ausführungsform zylindrische Küken entsprechend Fig. 2 aus der dick durchgezogenen Position zum Versperren des Meßmediumzuflusses in die gestrichelte Position, dabei dem Pfeil A′ folgend, verdreht, dann ist ohne weiteres ersichtlich, daß sich hierbei die Meßsondenspitze 15 problemlos noch in der in Fig. 2 gestrichelt angedeuteten zurückgezogenen Position 15′ befinden kann, ohne daß hierdurch irgendeine Beschädigung der Meßsondenspitze durch das sich drehende Küken möglich wäre.

Dabei sperrt dann allerdings der verbleibende Bereich der Kükenwandung den Durchtrittskanal zum Meßmedium nach unten wirksam ab, wobei der jetzt in Querrichtung verlaufende Durchtrittskanal 20 in die Position 20′ gelangt ist und zusammen mit der Meßsondenspitze 15′ in jeder gewünschten Weise gereinigt, gespült und die Meßsonde dabei auch entsprechend aufbearbeitet, gewässert, kalibriert u.dgl. werden kann. Hierzu ist es natürlich möglich, daß im Gehäuse 17 des Absperrorgans falls gewünscht und wie bei 22 angedeutet, noch Querkanäle vorgesehen sein können, durch welche entsprechende Spül-, Puffer- oder Eichlösungen oder sonstige Mittel geführt werden können. Diese erreichen wirkungsvoll alle Toträume im Bereich des Absperrorgans sowie die Meßsondenspitze, ohne daß es erforderlich ist, die Meßsonde vollständig und mit erheblich größerer Hubbewegung aus dem Bereich des Absperrorgans herauszuheben.

Eine weitere bevorzugte Ausgestaltung, auf die weiter vorn schon kurz eingegangen ist, ergibt sich dadurch, daß der weggenommene Wandbereich des zylindrischen Kükens sich nur auf einer Seite, nämlich bei 23 (vergleiche die Fig. 3 und 4) bis zur vollen Höhe des Durchmessers des Durchtrittskanals 20 erstreckt, während auf der in der Darstellung der Fig. 3 linken Seite oben und unten ein um den Abstand B verjüngter beidseitiger Wandbereich 24 stehengelassen ist, der, wie bei 25 gezeigt, zunehmend nach innen verläuft, bis die in der Darstellung der Fig. 6 gut erkennbare, beidseitige Podeste bildende Kurvenform verschwunden ist.

Der Mechanismus, der hierdurch bewirkt wird, läßt sich ebenfalls am besten der Darstellung der Fig. 3 entnehmen, wobei in Fig. 3 die Ausgangsdrehposition des zylindrischen Kükens 18 gezeigt ist, in Verbindung mit der zurückgezogenen Anfangsposition, die die Meßsondenspitze 15 in Verbindung mit der inneren Rohrverlängerung 12a einnimmt, bevor das Küken in die Sperrposition gedreht wird. Man erkennt hierdurch nämlich, daß eine nunmehr beginnende Drehbewegung des Kükens aus der Position der Fig. 3 entsprechend dem Pfeil A′ um 90° in die Querschnittsposition der Fig. 4 dazu führt, daß der vordere bzw. entsprechend den Fig. 1 und 2 untere Stirnrand der inneren Rohrverlängerung auf die Kurvenanfangsfläche 26 des oberen und unteren Führungsstegs 27 im freien Durchtrittsraum des Kükens 18 auftrifft, während die empfindliche Meßsondenspitze 15 geschützt in den freien Durchtrittskanalraum hineinragt. Bei der Drehbewegung des Kükens wird dann,soweit erforderlich, durch die Führungsstege 27 die Meßsondenspitze automatisch noch so weit zurückgeschoben, daß unter allen Umständen und auch bei möglichen fehlerhaften Verschiebungen sichergestellt ist, daß die Drehbewegung des Kükens selbst dafür sorgt, daß die Meßsondenspitze keine Beschädigungen mehr erleiden kann, und zwar durch die zwangsläufige weitere, vom Absperrkörper selbst aufgebrachte Rückschiebewirkung auf die Meßsonde. Diese kann daher keinesfalls mehr in einer sie gefährdenden Position verbleiben.

Es sei noch darauf hingewiesen, daß im Bereich der verbliebenen Kükenrückfläche, also der Fläche, die sich nach dem Eindrehen in die Sperrposition entsprechend Fig. 2 auf den Meßmediumszufluß gerichtet ist, eine Ringdichtung 28 in den hier zylindrischen Körper des Kükens eingelassen ist, die in einer entsprechend eingefrästen elliptischen und dabei gleichzeitig der zylindrischen Krümmung des Kükens folgenden Aufnahmenut 28′ sitzt. Bei der Herstellung dieser Aufnahmenut 28 kann so vorgegangen werden, daß auf die Zylinderfläche der Fig. 5 von oben, also senkrecht auf die Zeichenebene weisend, ein Fräser aufgesetzt wird, der sich in der ovalen Form der elliptischen Ringnut 28′ bewegt, wobei aber gleichzeitig der Kükenkörper noch eine Schwenkbewegung entsprechend dem Doppelpfeil C durchführen kann, so daß sich, wie beidseitig gestrichelt bei 30 angegeben, beidseitige geringfügige Hinterschneidungen der Nut 28′ ergeben, so daß ein von der Nut aufgenommener O-Ring sicher gehalten ist und auch bei der Umschaltbewegung aus der Sperr- in die Öffnungsposition und umgekehrt, bei welcher der O-Dichtring die Zuflußöffnung zum Meßmedium passieren muß, Aushebungen des Dichtrings aus seiner Nut ausgeschlossen sind.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Elektrodenhalterung für Eintauch-, Durchfluß und Anbau-Meßsysteme in der analytischen Chemie, insbesondere für die pH-, Redox-, Leitfähigkeits-, Sauerstoff- und Chlormessung u.dgl., mit einem Außenrohr (11), in welchem ein die Meßsonde tragendes Innenrohr (12) axial gleitverschieblich gelagert ist, und mit einem Absperrorgan (16), welches bei aus dem Meßmedium zurückgezogenem Innenrohr den Zufluß des Meßmediums mittels eines Kükens (18) absperrt, wobei sich längs des vom Küken (18) gebildeten inneren Durchtrittskanals (20) während der Betriebsstellung ein Schaft der Meßsonde erstreckt, dadurch gekennzeichnet, daß der innere Durchtrittskanal auf einer Seite (21) offen ist derart, daß das Küken (18) quer zum inneren Durchtrittskanal eine allgemein U-förmige Form aufweist.

2. Elektrodenhalterung nach Anspruch 1, dadurch gekennzeichnet, daß der Absperrkörper ein kugelförmiges oder zylindrisches Küken (18) ist.

3. Elektrodenhalterung nach Anspruch 1 oder 2, dadurch gekennzeichnet, daß bei zylindrischem Küken (18) die äußere Fläche der verbleibenden Wandung des Durchtrittskanals (20; 20') eine auf die Zuflußöffnung für das Meßmedium gerichtete Ringdichtung (28) lagert.

4. Elektrodenhalterung nach Anspruch 3, dadurch gekennzeichnet, daß die Ringdichtung (28) als O-Ring in einer einer ovalen oder elliptischen Form folgenden Ringnut (28') eingelegt ist, die mindestens an bestimmten Stellen die eingelegte Dichtung (28) gegen ein Verschieben sichernde Hinterschneidungen (30) aufweist.

5. Elektrodenhalterung nach einem der Ansprüche 1 bis 4, dadurch gekennzeichnet, daß auf beiden Seiten des den Durchtrittskanal (20) des Kükens (18) seitlich öffnenden Bereichs (21) Führungsstege (27) für den vorderen, im Bereich des Kükens verbleibenden Teil der Meßsondenapparatur vorgesehen sind, die bei Drehung des Kükens zwangsweise und durch formschlüssigen Eingriff den vorderen Meßsondenbereich soweit zurückschieben können, daß die Meßsondenspitze (15) gegenüber jeglicher körperlichen Berührung und Beschädigung durch die Kükendrehung geschützt ist.

6. Elektrodenhalterung nach Anspruch 5, dadurch gekennzeichnet, daß sich die oberen und unteren Führungsstege (27) vom Außenumfang des Kükens einem kurvenförmigen Verlauf (24, 25, 26) folgend nach innen bis zum Durchtrittskanal (20) verjüngen und eine solche Höhe aufweisen, daß zwischen ihnen die Meßsondenspitze (15) unbeschädigt aufgenommen ist, während die Führungssteg-Randkanten in Wirkverbindung mit einer vorderen Ringkante des die Meßsonde lagernden Innenrohrs (12) gelangen.

## Claims

1. A holder for electrodes for immersion measurement systems, flow measurement systems and externally mounted measurement systems in analytical chemistry, particularly for measurement of pH, redox, conductivity, oxygen, chlorine or the like, with an outer pipe (11) inside which an inner pipe (12) supporting the measuring probe is mounted so as to be axially slidably displaceable, and with a shut-off member (16) which, when the inner pipe is withdrawn from the measurement medium, shuts off the influx of the measurement medium by means of a plug (18), a shaft of the measuring probe extending along the inner passage channel (20) formed by the plug (18) when in operational position, **characterised in that** the inner passage channel is open on one side (21) in such a manner that the plug (18) is generally U-shaped transversely to the inner passage channel.

2. A holder for electrodes in accordance with claim 1, **characterised in that** the shut-off member is a spherical or cylindrical plug (18).

3. A holder for electrodes in accordance with claim 1 or 2, **characterised in that** in the case of a cylindrical plug (18), the outer surface of the remaining wall of the passage channel (20; 20') supports a ring seal (28) directed towards the influx opening for the measurement medium.

4. A holder for electrodes in accordance with claim 3, **characterised in that** the ring seal (28), in the form of an O-shaped ring, is inserted in an annular groove (28') of oval or elliptical form, the said groove having undercuts (30) at least at certain points, to secure the inserted seal (28) against displacement.

5. A holder for electrodes in accordance with one of claims 1 to 4, **characterised in that** guide lands (27), for the front part of the measuring probe apparatus remaining in the vicinity of the plug, are provided on both sides of the region (21) which forms a lateral opening of the passage channel (20) in the plug (18), and upon rotation of the plug, the said lands can push back the front region of the measuring probe, forcibly and by positive engagement, to such an extent that the tip (15) of the measuring probe is protected from any physical contact and damage resulting from rotation of the plug.

6. A holder for electrodes in accordance with claim 5, **characterised in that** the upper and lower guide lands (27) taper inwardly from the outer periphery of the plug over a curved course (24, 25, 26) as far as the passage channel (20), and are of such a height that the tip (15) of the measuring probe is held therebetween without being damaged, whilst the guide land outer lateral edges come into active connection with a front ring edge of the inner pipe (12) which supports the measuring probe.

## Revendications

1. Support pour électrodes pour un système de mesure par plongée, passage et montage en chimie analytique notamment pour des mesures de pH, Redox, de conductivité, de teneur en oxygène et de teneur en chlore ou mesures analogues, avec un tube extérieur (11) recevant en coulissement axial un tube intérieur (12) portant la sonde de mesure et un organe d'arrêt (16) qui, lorsque le tube intérieur est retiré du fluide de mesure, ferme à l'aide d'un boisseau (18), le retour du fluide de mesure, et le long du canal de passage (20), intérieur formé par le boisseau (18), pendant la position de fonctionnement, s'étend une tige de la sonde de mesure, caractérisé en ce que le canal de passage intérieur est ouvert d'un côté (21) de façon que le boisseau (18) présente globalement une forme de U, transversalement au canal de passage intérieur.

2. Support pour électrodes selon la revendication 1, caractérisé en ce que l'organe d'arrêt est un boisseau sphérique ou cylindrique (18).

3. Support pour électrodes selon la revendication 1 ou 2, caractérisé en ce que dans le cas d'un boisseau cylindrique (18), la surface extérieure de la paroi restant du canal de passage (20; 20') reçoit un joint annulaire (28) dirigé vers l'ouverture d'arrivée du fluide de mesure.

4. Support pour électrodes selon la revendication 3, caractérisé en ce que le joint annulaire (28) est un joint torique logé dans une rainure (28') de forme ovale ou elliptique, cette rainure ayant au moins à certains endroits, des parties en contre-dépouille (30) qui bloquent en translation le joint (28) mis en place.

5. Support pour électrodes selon l'une des revendications 1 à 4, caractérisé en ce que des deux côtés du canal de passage (20) du boisseau (18) il y a des entretoises de guidage (22) latéralement par rapport à la zone ouverte (21), pour la partie de l'appareil de la sonde de mesure, avant, qui reste au niveau du boisseau, et qui, lorsqu'on tourne le boisseau de force, peuvent être refoulées par une action liée à la forme de la zone avant de la sonde de mesure jusqu'à ce que la pointe (15) de la sonde de mesure soit protégée contre tout contact corporel et tout endommagement par la rotation du boisseau.

6. Support pour électrodes selon la revendication 5, caractérisé en ce que les ailes de guidage supérieures et inférieures (27) suivent un tracé courbe (24, 25, 26) à partir de la périphérie extérieure du boisseau, vers l'intérieur jusqu'au niveau du canal de passage (20) en diminuant et elles ont une hauteur leur permettant de recevoir entre elles la pointe de la sonde de mesure (15) sans l'endommager, alors que les arêtes des entretoises de guidage coopérent avec une arête annulaire avant du tube intérieur(12) logeant la sonde de mesure.
